# FASCICULE DE BREVET EUROPEEN

(11) **EP 2 262 675 B1**
(45) Date de publication et mention de la délivrance du brevet: **04.07.2012**
(21) Numéro de dépôt: 09729429.2
(22) Date de dépôt: 09.03.2009
(51) Int. Cl.: B62D 25/04, B62D 25/08

(54) **PIED AVANT RENFORCE D'UN VEHICULE AUTOMOBILE**
VERSTÄRKTE SÄULE FÜR EIN MOTORFAHRZEUG
STRENGTHENED "A" PILLAR FOR A MOTOR VEHICLE

(30) Priorité: 07.04.2008 FR 0852310
(43) Date de publication de la demande: 22.12.2010
(73) Titulaire: Peugeot Citroën Automobiles SA, 78140 Vélizy-Villacoublay (FR)
(72) Inventeur: MASSIF, Kevin, F-78280 Guyancourt (FR)
(74) Mandataire: Fernandez, Francis Lionel
(86) Numéro de dépôt international: PCT/FR2009/050382
(87) Numéro de publication internationale: WO 2009/125098

(56) Documents cités:
- EP-A- 1 084 936
- EP-A- 1 132 280
- WO-A-2005/056369
- US-A1- 2004 140 693

## Description

La présente invention concerne un pied avant renforcé d'un véhicule automobile ainsi qu'un véhicule automobile comportant un tel pied.

Les pieds avant constituent des structures porteuses pour certaines poutres des véhicules automobiles. Ces pieds sont renforcés. Ainsi, ils assurent une transmission efficace des efforts résultant d'un choc frontal vers l'arrière de la structure de caisse du véhicule et la porte.

Pour l'homologation des véhicules suite à un choc frontal, la porte ne doit pas se désolidariser de la structure. Autrement dit, la porte ne doit pas s'échapper. C'est la raison pour laquelle la rotation des pieds avant, qui est due, dans le cas d'un choc frontal, à la poussée sensiblement longitudinale du bandeau de porte, d'une part, et à la rotation autour d'un axe vertical du long pied résultante de la poussée du longeron sensiblement longitudinale et vers l'intérieur du véhicule, d'autre part, doit être maîtrisée.

Différentes solutions techniques ont déjà été mises en oeuvre pour limiter la rotation du pied avant et assurer une transmission des efforts adéquates vers l'arrière de la structure de caisse et la porte, dans le cas d'un choc frontal.

On connaît, par exemple, selon le document FR 2 800 698, un pied avant de véhicule automobile, qui intègre, en une pièce unique, un corps central allongé comportant, à chacune de ses extrémités, au moins un support d'extrémité de poutre. Une extrémité du corps central comporte deux supports d'extrémité de poutre, et un desdits supports au moins comporte une paroi contre laquelle l'extrémité de la poutre associée vient en butée.

On connaît également, selon le document US 7 140 674 B2, une structure de caisse de véhicule, qui comporte un corps latéral. L'ossature de ce corps latéral est constituée d'un panneau de caisse, qui forme une surface interne de la caisse du véhicule, et d'un organe de renfort, qui est réalisé à l'intérieur d'une forme s'étendant à l'intérieur du panneau de caisse et qui est relié à ce dernier. Cette structure de caisse comporte également une armature d'encadrement avant, qui forme un corps avant placé de manière à constituer une forme s'étendant à partir du corps latéral vers l'avant de la caisse du véhicule, et une armature d'encadrement externe, qui est reliée à l'armature d'encadrement avant à partir du côté de la caisse du véhicule et qui est fixée à l'organe de renfort au moyen de boulons traversant le panneau de caisse.

Le document EP1132280 décrit un pied avant renforcé d'un véhicule automobile selon le préambule de la revendication 1, comprenant une pièce supérieure en forme de gousset assemblée à une pièce inférieure en forme de renfort de pied avant, et en ce que ledit gousset présente, d'une part, une partie supérieure destinée à être assemblée à un montant d'une baie dudit véhicule.

Par ailleurs, la Demanderesse a développé une structure perfectionnée de pied avant de véhicule automobile. Cette structure perfectionnée est décrite dans les demandes de brevet déposées sous les numéros FR0730126 et FR0850048, qui n'ont pas été publiées au jour du dépôt de la présente demande de brevet en France. Dans cette structure, le pied avant comprend deux pièces superposées, à savoir une pièce supérieure et une pièce inférieure. La pièce inférieure, désignée aussi « renfort de pied avant », présente un bord supérieur situé légèrement au dessus de la charnière supérieure de la porte avant du véhicule.

Compte tenu de ce qui précède, un problème que se propose de résoudre l'invention est de fournir un pied avant renforcé de véhicule, de conception et de réalisation plus simple et plus économique que ceux de l'art antérieur, qui offre une raideur équivalente à ceux connus de l'art antérieur et améliore le contrôle de la rotation de pied avant de sorte qu'il permette de répondre aux contraintes exigées par les tests d'homologation en choc frontal.

La solution de l'invention à ce problème a pour premier objet un pied avant renforcé d'un véhicule automobile, caractérisé en ce qu'il comprend une pièce supérieure ou gousset assemblée à une pièce inférieure ou renfort de pied avant, et en ce que ledit gousset présente, d'une part, une partie supérieure destinée à être assemblée à un montant d'une baie dudit véhicule et, d'autre part, une partie inférieure dont un bord est destiné à être positionné au dessous d'une charnière d'une porte avant dudit véhicule.

Elle a pour second objet un véhicule automobile, caractérisé en ce qu'il comporte des pieds avant renforcés conformes au pied avant renforcé ci-dessus.

D'autres buts, avantages et caractéristiques de l'invention seront mieux compris à la lecture de la description des modes de réalisation préférés qui suivent, non limitatifs de l'objet et de la portée de la présente demande de brevet, et qui sont rédigés au regard des dessins annexés, dans lesquels :
- la figure 1 représente, de manière schématique, une structure de caisse avant d'un véhicule automobile ainsi que les efforts transmis audit véhicule, qui résultent d'un choc frontal ;
- la figure 2 est une vue latérale d'un gousset de pied avant renforcé selon l'invention ;
- la figure 3 est une vue latérale d'un pied avant renforcé selon l'invention montrant une charnière fixée dans le recouvrement entre le gousset et le renfort ;
- les figures 4A et 4B sont des vues latérales de pieds avant renforcés selon l'invention, dans lesquelles le gousset est assemblé en préparation sur le renfort inférieur de pied avant, ou alors, sous ce renfort, respectivement ; et
- la figure 5 est une vue en perspective décalée d'un gousset d'un pied avant illustrant en particulier l'assemblage dudit gousset avec un pare-brise d'un véhicule automobile.

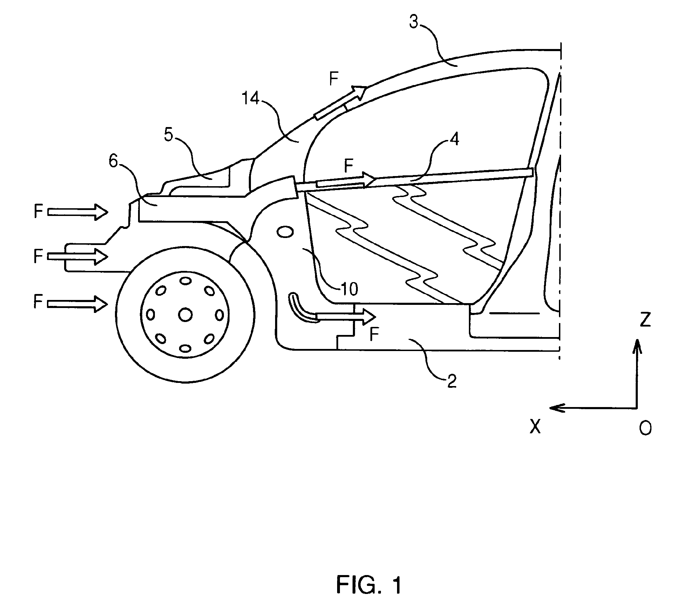

A la figure 1, on a représenté, de manière schématique, une structure de caisse avant gauche 1 d'un véhicule automobile.

La description qui suit s'applique *mutatis mutandis* à une structure équivalente correspondant au côté avant droit du véhicule.

La structure de caisse 1 comporte un pied avant 10, 14. Ce pied 10, 14 comprend deux pièces superposées, à savoir une pièce supérieure 14 ou gousset, et une pièce inférieure 10 ou renfort de pied avant.

Le pied avant 10, 14 est un noeud structurel sur lequel repose, entre autres pièces, un côté de caisse 2, un montant 3 de baie, un bandeau 4 de porte, un support 5 d'aile, et un renfort avant de côté d'habitacle 6.

Dans le cas d'un choc frontal, les efforts appliqués à l'avant de la structure de caisse 1 sont transmis dans celle-ci, vers l'arrière du véhicule. A la figure 1, ces efforts sont illustrés par des flèches F. Il apparaît que le gousset 14 supérieur de pied avant forme un noeud de passage essentiel pour la transmission de ces efforts.

Ce gousset 14 forme également un noeud de raideur important, qui garantit l'intégrité de l'espace de survie habitacle. En effet, la rotation du pied 10, 14 selon un axe vertical OZ est susceptible d'entraîner une déformation de l'habitacle. En outre, elle est susceptible de causer l'échappement de la porte, ce qui interdit alors l'homologation du véhicule.

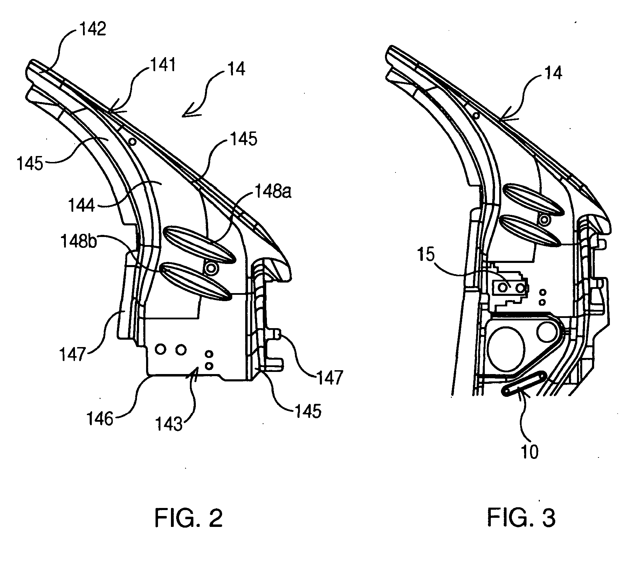

Ainsi que cela est plus particulièrement montré à la figure 2, le gousset 14 de pied avant est formé d'une seule pièce. Cette pièce est obtenue par emboutissage d'un matériau métallique. L'emboutissage est réalisé au moyen d'un unique outil de formage et de trois outils seulement de découpe et/ou de finition, ce qui diminue les coûts de fabrication. La structure du gousset 14, ainsi que sa forme, assurent la raideur suffisante recherchée.

Le gousset 14 présente une partie supérieure 141 évasée vers le bas, légèrement bombée, dont une extrémité supérieure 142, sensiblement en pointe, et inclinée vers l'arrière du véhicule, est destinée à être assemblée au montant 3 de baie tout en assurant l'étanchéité avec celui-ci. Le gousset 14 présente en outre une partie inférieure 143 destinée à être assemblée au renfort 10, dans une partie supérieure de celui-ci.

La forme générale en demi boîte du gousset 14 présente un fond 144 sensiblement plan, des bords latéraux relevés 145, un bord inférieur 146 et, par conséquent, une section transversale sensiblement en U aux branches courtes. Les bords latéraux 145 du gousset 14 présentent en outre des feuillures 147 dont les découpes spécifiques permettent d'assurer une fixation adéquate du gousset 14 avec le renfort avant de côté d'habitacle 6 notamment.

Le gousset 14 présente en outre au moins un et de préférence deux emboutis 148a, 148b. Ces emboutis 148a, 148b sont sensiblement oblongs et parallèles entre eux. Ils s'étendent sur une partie substantielle du fond 144 sensiblement plan du gousset 14. Ils présentent un axe longitudinal de symétrie et une inclinaison par rapport à la direction longitudinale OX du véhicule automobile. Ils sont destinés à rigidifier le gousset 14 et, plus particulièrement, le fond 144 de celui-ci. Ils concourent au contrôle de la rotation du pied avant 10, 14 et à la transmission des efforts résultant d'un choc frontal sur le véhicule.

Ainsi que cela est plus particulièrement montré à la figure 3, le gousset 14 chausse le renfort 10. L'assemblage entre le gousset 14 et le renfort 10 est réalisé de sorte que la partie inférieure du gousset 143 et une partie supérieure du renfort 10 se recouvrent. Ainsi, la rotation du pied avant est maîtrisée lors d'un choc frontal. De surcroît, la porte du véhicule ne se désolidarise pas de la structure de caisse 1 du véhicule lors d'un tel choc.

Une charnière 15 de la porte du véhicule, en particulier la charnière supérieure dudit véhicule, est fixée dans le recouvrement entre la partie inférieure 143 du gousset 14 et la partie supérieure du renfort 10. En effet, ce recouvrement forme une surépaisseur due à la superposition des matériaux métalliques constitutifs du gousset 14 et du renfort 10. Cette surépaisseur remplit la fonction de romaine, c'est-à-dire la fonction de la plaque épaisse classiquement disposée derrière la charnière, qui assure le fonctionnement de la porte.

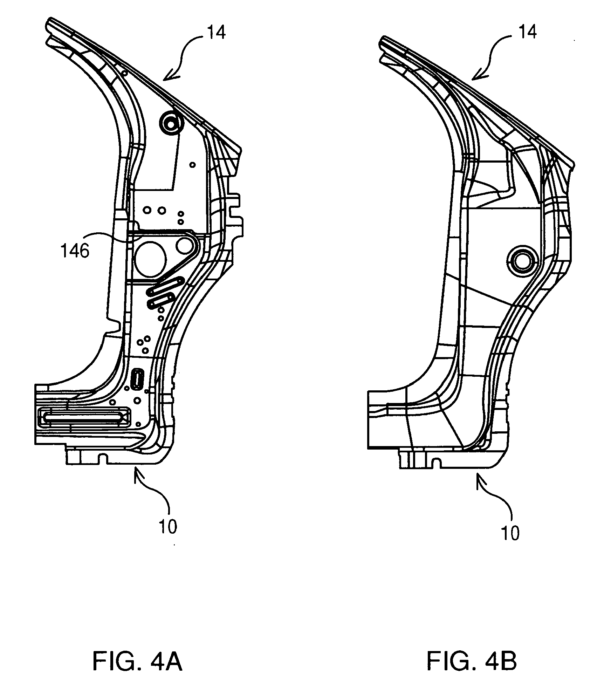

Si l'on se rapporte maintenant aux figures 4A et 4B, il apparaît que le gousset 14 peut être assemblé au renfort 10 selon deux variantes de réalisation au moins. Dans une première variante de réalisation illustrée à la figure 4A, le bord inférieur 146 du gousset 14 est positionné sur le bord supérieur du renfort 10. Dans une seconde variante de réalisation illustrée à la figure 4B, le bord inférieur du gousset 14 est positionné sous le bord supérieur du renfort 10.

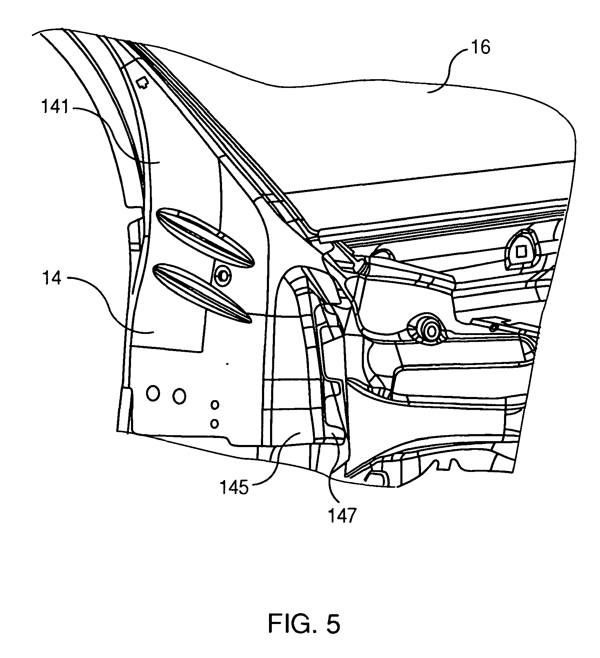

En pratique, le gousset 14 est assemblé en préparation sur le renfort 10 de pied avant puis assemblé par la suite avec le montant de baie 3, le renfort longeron puis le côté habitacle. Ainsi que cela apparaît à la figure 5, les assemblages sont assurés par les découpes des feuillures 147 des bords latéraux relevés 145. L'assemblage de la partie supérieure 141 du gousset 14 assure une fonction d'étanchéité avec le pare-brise 16.

En définitive, le pied avant découpé en deux pièces superposées selon l'invention présente une raideur équivalente aux pieds avant connus de l'art antérieur et améliore le contrôle de la rotation dudit pied lorsqu'un choc frontal est appliqué au véhicule, avec des gains économiques en réalisation, en assemblage et en masse. En effet, on constate que le nombre de pièces utilisées pour la fabrication des pieds avant selon l'invention est inférieur au nombre de pièces utilisées pour la fabrication de pieds avant selon l'état de la technique. Par exemple, les pieds avant selon l'invention ne comportent pas de raidisseurs spécifiques classiquement utilisés pour les pieds avant de l'état de la technique, qui entretoisent les faces desdits pieds. En outre, les romaines de charnières sont supprimées dans les pieds avant selon l'invention. On constate par ailleurs une diminution de masse du pied, qui est de l'ordre de 1,5 kg pour un véhicule automobile de petite catégorie.

Bien entendu, l'invention ne se limite pas au mode de réalisation décrit et représenté dans les figures jointes et l'homme du métier pourra être amené, grâce à des opérations de routine, à réaliser d'autres modes de réalisation non décrits explicitement, sans sortir du cadre et de la portée de la présente invention, definie par les revendications suivantes.

## Revendications

1. Pied avant renforcé d'un véhicule automobile, comprenant une pièce supérieure en forme de gousset (14) assemblée à une pièce inférieure en forme de renfort de pied avant (10), ledit gousset (14) présentant, d'une part, une partie supérieure (141) destinée à être assemblée à un montant (3) d'une baie dudit véhicule, **caractérisé en ce que** ledit gousset présente d'autre part, une partie inférieure (143) dont un bord (146) est destiné à être positionné au dessous d'une charnière (15) d'une porte avant dudit véhicule.

2. Pied avant selon la revendication 1, **caractérisé en ce que** le renfort de pied avant (10) présente une partie supérieure, et **en ce que** la partie inférieure (143) du gousset (14) et la partie supérieure du renfort (10) se recouvrent, la charnière (15) étant fixée audit pied dans le recouvrement entre lesdites parties inférieure (143) du gousset (14) et supérieure du renfort de pied avant (10).

3. Pied avant selon l'une des revendications 1 ou 2, **caractérisé en ce que** le gousset (14) comprend au moins un embouti (148a, 148b).

4. Pied avant selon la revendication 3, **caractérisé en ce que** le gousset (14) comprend deux emboutis (148a, 148b).

5. Pied avant selon l'une des revendications 3 ou 4, **caractérisé en ce que** le ou les emboutis (148a, 148b) présentent une forme oblongue qui s'étend sur une partie substantielle de la largueur du gousset (14) et **en ce que** le ou lesdits emboutis (148a, 148b) présentent en outre une inclinaison par rapport à une direction longitudinale OX du véhicule automobile.

6. Pied avant selon l'une des revendications précédentes, **caractérisé en ce que** le gousset (14) est assemblé au renfort (10), de manière que son bord inférieur (146) soit positionné sur un bord supérieur du renfort (10).

7. Pied avant selon l'une des revendications 1 à 5, **caractérisé en ce que** le gousset (14) est assemblé au renfort (10), de manière que le bord inférieur (146) du gousset (14) soit positionné sous un bord supérieur du renfort (10).

8. Pied avant selon l'une des revendications précédentes, **caractérisé en ce que** le gousset (14) présente un fond (144) sensiblement plan, des bords latéraux relevés (145) et, par conséquent, une section transversale sensiblement en U, la partie supérieure (141) dudit gousset (14) assurant une fonction d'étanchéité avec un pare-brise (16) du véhicule.

9. Pied avant selon l'une quelconque des revendications précédentes, **caractérisé en ce que** le gousset (14) est obtenu selon un procédé d'emboutissage à un unique outil de formage et trois outils seulement de découpe et/ou de finition.

10. Véhicule automobile, **caractérisé en ce qu'**il comporte des pieds avant renforcés conformes au pied avant renforcé (10, 14) selon l'une quelconque des revendications 1 à 9.

## Claims

1. A strengthened "A" pillar of a motor vehicle comprising an upper part in the form of a gusset (14) assembled to a lower part in the form of an "A" pillar strengthener (10), the said gusset (14) having, on the one hand, an upper portion (141) intended to be assembled to an upright (3) of an opening of the said vehicle, **characterized in that** the said gusset has, on the other hand, a lower portion (143), an edge (146) of which is intended to be positioned beneath a hinge (15) of a front door of the said vehicle.

2. The "A" pillar according to Claim 1, **characterized in that** the "A" pillar strengthener (10) has an upper portion, and **in that** the lower portion (143) of the gusset (14) and the upper portion of the strengthener (10) overlap one another, the hinge (15) being fixed to the said pillar in the overlap between the said lower portion (143) of the gusset (14) and upper portion of the "A" pillar strengthener (10).

3. The "A" pillar according to one of Claims 1 or 2, **characterized in that** the gusset (14) comprises at least one stamped part (148a, 148b).

4. The "A" pillar according to Claim 3, **characterized in that** the gusset (14) comprises two stamped parts (148a, 148b).

5. The "A" pillar according to one of Claims 3 or 4, **characterized in that** the stamped part(s) (148a, 148b) have an oblong shape which extends over a substantial part of the width of the gusset (14) and **in that** the stamped part(s) (148a, 148b) have in addition an inclination with respect to a longitudinal direction OX of the motor vehicle.

6. The "A" pillar according to one of the preceding claims, **characterized in that** the gusset (14) is assembled to the strengthener (10) so that its lower edge (146) is positioned on an upper edge of the strengthener (10).

7. The "A" pillar according to one of Claims 1 to 5, **characterized in that** the gusset (14) is assembled to the strengthener (10), so that the lower edge (146) of the gusset (14) is positioned beneath an upper edge of the strengthener (10).

8. The "A" pillar according to one of the preceding claims, **characterized in that** the gusset (14) has a substantially flat base (144), raised lateral edges (145) and, consequently, a substantially U-shaped cross-section, with the upper portion (141) of the said gusset (14) ensuring a sealing function with a windscreen (16) of the vehicle.

9. The "A" pillar according to any one of the preceding claims, **characterized in that** the gusset (14) is obtained by a stamping process with a single forming tool and only three cutting and/or finishing tools.

10. A motor vehicle, **characterized in that** it comprises strengthened "A" pillars in accordance with the strengthened "A" pillar (10, 14) according to any one of Claims 1 to 9.

## Patentansprüche

1. Verstärkte Säule eines Kraftfahrzeugs, die einen oberen Teil in Form eines Eckstücks (14) aufweist, der mit einem unteren Teil in Form einer Verstärkung der Säule (10) zusammengefügt ist, wobei das Eckstück (14) einerseits einen oberen Teil (141) aufweist, der dazu bestimmt ist, mit einem Pfosten (3) einer Öffnung des Fahrzeugs zusammengefügt zu werden, **dadurch gekennzeichnet, dass** das Eckstück andererseits einen unteren Teil (143), dessen Rand (146) dazu bestimmt ist, unterhalb eines Scharniers (15) einer Vordertür des Fahrzeugs positioniert zu werden, aufweist.

2. Säule nach Anspruch 1, **dadurch gekennzeichnet, dass** die Verstärkung der Säule (10) einen oberen Teil aufweist und dass der untere Teil (143) des Eckstücks (14) und der obere Teil der Verstärkung (10) einander überlappen, wobei das Scharnier (15) an der Säule in der Abdeckung zwischen dem unteren Teil (143) des Eckstücks (14) und dem oberen Teil der Verstärkung der Säule (10) befestigt ist.

3. Säule nach einem der Ansprüche 1 oder 2, **dadurch gekennzeichnet, dass** das Eckstück (14) mindestens eine Stanzung (148a, 148b) aufweist.

4. Säule nach Anspruch 3, **dadurch gekennzeichnet, dass** das Eckstück (14) zwei Stanzungen (148a, 148b) aufweist.

5. Säule nach einem der Ansprüche 3 oder 4, **dadurch gekennzeichnet, dass** die Stanzung oder die Stanzungen (148a, 148b) eine längliche Form aufweisen, die sich auf einem wesentlichen Teil der Breite des Eckstücks (14) erstreckt, und dass die Stanzung und oder die Stanzungen (148a, 148b) ferner eine Neigung in Bezug zu einer Längsrichtung OX des Kraftfahrzeugs aufweisen.

6. Säule nach einem der vorhergehenden Ansprüche, **dadurch gekennzeichnet, dass** das Eckstück (14) mit der Verstärkung (10) derart zusammengefügt ist, dass sein unterer Rand (146) auf dem oberen Rand der Verstärkung (10) positioniert ist.

7. Säule nach einem der Ansprüche 1 bis 5, **dadurch gekennzeichnet, dass** das Eckstück (14) mit der Verstärkung (10) derart zusammengefügt ist, dass der untere Rand (146) des Eckstücks (14) unter einem oberen Rand der Verstärkung (10) positioniert ist.

8. Säule nach einem der vorhergehenden Ansprüche, **dadurch gekennzeichnet, dass** das Eckstück (14) einen Grund (144) aufweist, der im Wesentlichen eben ist, hochgezogene Seitenränder (145) und daher einen im Wesentlichen U-förmigen Querschnitt, wobei der obere Teil (141) des Eckstücks (14) eine Abdichtfunktion mit einer Windschutzscheibe (16) des Fahrzeugs sicherstellt.

9. Säule nach einem der vorhergehenden Ansprüche, **dadurch gekennzeichnet, dass** das Eckstück (14) gemäß einem Stanzverfahren mit einem einzigen Formwerkzeugs und nur drei Werkzeugen zum Schneiden und/oder zur Endfertigung erhalten wird.

10. Kraftfahrzeug, **dadurch gekennzeichnet, dass** es verstärkte Säulen gemäß der verstärkten Säule (10, 14) nach einem der Ansprüche 1 bis 9 aufweist.
